# EUROPEAN PATENT APPLICATION

(11) **EP 2 141 899 A1**
(43) Date of publication of application: **06.01.2010**
(21) Application number: 08104634.4
(22) Date of filing: 04.07.2008
(51) Int. Cl.: H04M 3/30

(54) **Method and device for data processing and communication system comprising such device**

(71) Applicant: Nokia Siemens Networks OY, 02610 Espoo (FI)
(72) Inventor: Haustein, Thomas, Dr., 81735 München (DE); Treyer, Thomas, 81379 München (DE); Zirwas, Wolfgang, 81249 München (DE)
(74) Representative: Bruglachner, Thomas E.

(57) **Abstract**

A method and a device are provided for data processing comprising the steps of (i) a broadcast signal is sent from a first network element towards at least one second network element via a communication channel, and (ii) the broadcast signal is utilized for a centralized control of the at least one second network element. Furthermore, a communication system is suggested comprising such a device.

## Description

The invention relates to a method and to a device for data processing and to a communication system comprising such device.

In fixed wired high speed data connection (DSL - digital subscriber line) new standards like VDSL2 are emerging and are under discussion.

An increasing user load and further demands for bandwidth express a growing need for higher throughput preferably at low cost. One approach to face this requirement is by using higher order modulation to increase a spectral efficiency of the limited frequency spectrum.

In current DSL systems, a multi-user configuration with k active users after training, locking, and converged link adaptation (frequency dependent selection of modulation and a joint coding scheme) may reach a working point with very low target bit error rates providing a reasonable SINR margin. This is in particular useful if additional users join the setup.

Furthermore, DSL traditionally operates in a circuit switched mode. Hence, if no useful data is transmitted, idle data will be transmitted in uplink and downlink direction(s). This results in constant interference to other connections of the same cable bundle.

Actually, an operation point set sometimes utilizes an SINR margin that is not sufficient to (fully or at all) compensate sudden additional interference caused by further users joining the multi-user system. As the link adaptation (changing the parameters of the actual operation point) is a slow process (i.e. it may last for a duration in the range of seconds to minutes) compared to sudden interference events, a link may experience non-compensable bit error rates (BERs) over a long time due to overloading and the link may even be dropped. After that, a new link can be configured, but disadvantageously the user perceives an interruption of the connection.

It is a further problem that interference occurs in a feeder cable comprising multiple twisted pair cables. The twisted pair cables are not connected in a structured way, because typically the connection from the feeder cable to a digital subscriber line access multiplexer (DSLAM) is done sequentially in the order of users subscribing to DSL services. In case of multiple DSLAMs being deployed in a central office (CO) all or at least some of the DSLAMs may be connected to the same feeder cable. If more than one DSLAM is involved in a transmission over one specific cable, a preprocessing for interference cancellation is required by all DSLAMs involved. For this purpose, it needs to be determined in a first step which DSLAMs are connected to one specific cable, i.e. a DSLAM has to identify further DSLAMs that are connected to the specific cable bundle for which interference cancellation is to be processed.

It is another disadvantage of existing solutions that a DSL modem of a specific DSL line may initiate a training phase. Such training phase meets an existing particular noise margin set for all DSL lines, wherein such margin has to cope with a training sequence of an additional DSL line. As explained above, such margin is either rather limited in order to allow several additional modems to initiated such training or it may be no limited enough and thus it may lead to interruptions of existing connection.

The **problem** to be solved is to overcome the disadvantages set forth above and in particular to improve signal handling processes via several lines, e.g., via several digital subscriber lines.

This problem is solved according to the features of the independent claims. Further embodiments result from the depending claims.

In order to overcome this problem, a method for data processing is suggested comprising the steps:
- a broadcast signal is sent from a first network element towards at least one second network element via a communication channel,
- the broadcast signal is utilized for a centralized control of the at least one second network element.

The approach suggested applies to fixed network as well as to wireless connections (e.g., WiMAX). Hence, in particular a fixed point to multi-point connection is considered, wherein "fixed" may relate to a stationary or quasi-stationary positioning of a base station or a central office (CO) as well as to user terminals (UT).

In an embodiment, said communication channel comprises a broadcast channel.

In another embodiment, the first network element is a central office and the network comprises or is associated with a digital subscriber line (DSL).

In a further embodiment, the second network element is or is associated with a customer premises equipment (CPE).

In a next embodiment, the first network element and the at least one second network element are connected via a digital subscriber line.

It is also an embodiment that the broadcast signal is conveyed at predefined code positions, in particular at predefined time and/or frequency positions of the signal conveyed from the first network element to the at least one second network element.

Pursuant to another embodiment, the broadcast signal is conveyed in a coherent manner.

According to an embodiment, the at least one second network element is synchronized based on the broadcast signal.

According to another embodiment, said broadcast signal is utilized for controlling joining of a further second network element.

In yet another embodiment, said further second network element is directed to and/or associated with a particular range of spectrum or code segment.

According to a next embodiment, the first network elements controls a link adaptation.

Pursuant to yet an embodiment, said broadcast signal comprises specific signals and/or pilots.

The problem stated above is also solved by a device comprising a and/or associated with a processor unit and/or a hard-wired circuit and/or a logic device that is arranged such that the method as described herein is executable on said processor unit.

According to an embodiment, the device is a communication device, in particular a or associated with a central office or digital subscriber line access multiplexer.

The problem stated supra is further solved by a communication system comprising the device as described herein.

Embodiments of the invention are shown and illustrated in particular in view of the following figure:

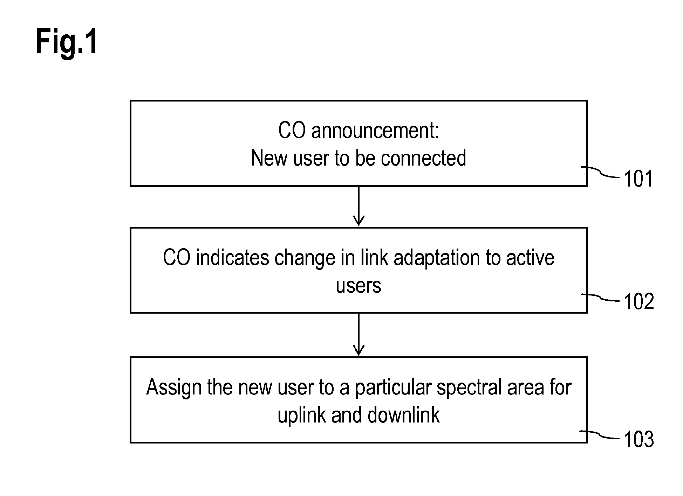

- Fig.1: shows a block diagram depicting steps of a method as how to efficiently utilize a broadcast signal in a multi-user system to enable a centralized control of said several users.

For the purpose of illustration, a scenario is presented referring to a fixed line environment like, e.g., xDSL. However, any kind of fixed or wireless connection may be applicable.

The approach suggested introduces a (virtual) broadcast signal that is conveyed from a Central Office (CO) via at least a portion of its ports (in particular via all its ports) to Customer Premises Equipments (CPEs) or registered users. Such signal is also referred to as broadcast channel, i.e. a logical channel or logical connection is associated with such broadcast signal.

The broadcast channel may preferably provide its signals and/or information at predefined time positions and/or frequency position. In general, as various kinds of coding of signals may apply, the signal of the broadcast channel can be supplied via a channel that is encoded, utilizing a particular coding scheme to convey the broadcast signal to its destinations, wherein the destinations know as how to decode the broadcast signal provided.

The broadcast channel (BCH) is preferably operated in a coherent manner, which allows network elements to synchronize on this BCH before requesting a link setup.

Furthermore, the CO may utilize the BCH as a means for signaling in order to control joining of new users or network elements. Hence, a network element to be connected can be directed to a particular spectrum range when ramping up its power. This allows the CO to predict and to control a degrading effect of additional interference caused by such an additional link to be established.

Furthermore, the CO may control a link adaptation in order to adapt a SINR margin in view of the current configuration in addition to the network element to be connected.

After joining, the link adaptation can be slowly (in comparison to the actual data rates) adapted or optimized to a new channel state thereby significantly reducing any risk of losing a connection to a joined network element.

Furthermore, the broadcast channel can be extended by using specific signals and/or pilots identifying the line cards in the CO in order to measure crosstalk from at least one other line-card. This allows different line cards to cooperate and coordinate in order to reduce crosstalk.

The broadcast channel may be used by DSLAMs and/or by line cards to send a unique identifier. If signals sent by multiple DSLAMs and/or line cards interfere with one another in the same feeder cable, they may listen to each other and utilize the unique identifiers received in order to identify each other, e.g., via a separate management channel in a plug and play operation mode.

Furthermore, the broadcast channel may be used to exchange more information between partner DSLAMs.

The CO can convey control information to all users in a downlink direction by using the BCH. This approach can be installed for the CO to at least partially control the network elements or components attached or associated.

An example according to **Fig.1** of such process can be as follows:
(1) The CO may announce towards the components attached that a new user or network element is going to get connected (step 101).
(2) The CO indicates a change in a link adaptation (bit-loading) to active network elements or users (step 102).
   Users in idle mode may be provided with a substantial SINR margin that allows a survival of an already established link. However, this may decrease the link throughput, but invisible to the user as he is not transmitting any real data in idle mode.
   For users in active mode transmitting real data the adaptation of the bit-loading can be more sophisticated in order to guarantee the survival of the established link and to only gradually reduce the throughput of the active link to a degree that does not significantly degrade the throughput experienced by the user.
(3) The new user can be directed to a certain spectral area (sub-carrier) for the uplink and for the downlink in order to enable a gradual joining of the user with low latency but at an increasing rate (step 103).

The BCH can be used to precisely synchronize all users. In case of coherent transmission to all users connected to the same line card and/or DSLAM, an inter-cable cross-talk does not deteriorate such transmission.

The crosstalk of other line-cards may be estimated and/or determined by the network element due to a dedicated signature (e.g., a code signature) of the line-card and/or of the DSLAM.

The BCH can also be used for the support of so-called "micro-sleep" functionalities, i.e., receiving components may be (at least temporarily) switched off if no real data is transmitted to the user).

If the BCH is transmitted at a predefined position or location in time and/or frequency, the CPEs know where to listen or look for the BCH in addition to a frame description channel. If a CPE is in idle mode, it may enter a sleep mode until a next BCH is sent by the CO. Upon receiving such BCH, the CPE may check whether there is new data in the next frame. If this is not the case, the CPE re-enters sleep mode. If the BCH is at an arbitrary position, the CPEs may have to check the whole frame length and may not enter sleep mode.

### Abbreviations:

- BCH: broadcast channel
- CO: central office
- CPE: customer premises equipment
- DSL: digital subscriber line
- DSLAM: digital subscriber line access multiplexer
- SINR: signal to interference plus noise ratio
- UT: user terminal

## Claims

**1.** A method for data processing comprising the following steps:
- a broadcast signal is sent from the first network element towards the at least second network element via a communication channel,
- the broadcast signal is utilized for a centralized control of the at least one second network element.

**2.** The method according to claim 1, wherein said communication channel comprises a broadcast channel.

**3.** The method according to any of claims 1 or 2, wherein the first network element is a central office and the network comprises or is associated with a digital subscriber line.

**4.** The method according to any of the preceding claims, wherein the second network element is or is associated with a customer premises equipment.

**5.** The method according to any of the preceding claims, wherein the first network element and the at least one second network element are connected via a digital subscriber line.

**6.** The method according to any of the preceding claims, wherein the broadcast signal is conveyed at predefined code positions, in particular at predefined time and/or frequency positions of the signal conveyed from the first network element to the at least one second network element.

**7.** The method according to any of the preceding claims, wherein the broadcast signal is conveyed in a coherent manner.

**8.** The method according to any of the preceding claims, wherein the at least one second network element is synchronized based on the broadcast signal.

**8.** The method according to any of the preceding claims, wherein said broadcast signal is utilized for controlling joining of a further second network element.

**9.** The method according to claim 8, wherein said further second network element is directed to and/or associated with a particular range of spectrum or code segment.

**10.** The method according to any of the preceding claims, wherein the first network elements controls a link adaptation.

**11.** The method according to any of the preceding claims, wherein said broadcast signal comprises specific signals and/or pilots.

**12.** A device comprising a and/or associated with a processor unit and/or a hard-wired circuit and/or a logic device that is arranged such that the method according to any of the preceding claims is executable thereon.

**13.** The device according to claim 12, wherein said device is a communication device, in particular a or associated with a central office or a digital subscriber line access multiplexer.

**14.** Communication system comprising the device according to any of claims 12 or 13.
